# EUROPÄISCHE PATENTSCHRIFT

(11) **EP 1 502 724 B1**
(45) Veröffentlichungstag und Bekanntmachung des Hinweises auf die Patenterteilung: **21.06.2006**
(21) Anmeldenummer: 03017022.9
(22) Anmeldetag: 26.07.2003
(51) Int. Cl.: B29C 47/68

(54) **Sieb-Vorrichtung für Aufbereitungs-Maschinen, insbesondere Extruder**
Filter for processing machines, specially extruders
Filtre pour machines de traitement, spécialement extrudeuses

(43) Veröffentlichungstag der Anmeldung: 02.02.2005
(73) Patentinhaber: Coperion Werner & Pfleiderer GmbH & Co. KG, 70469 Stuttgart (DE)
(72) Erfinder: Wohlfahrt-Laymann, Hendrik, 70569 Stuttgart (DE); Heidemeyer, Peter, Dr., 70806 Kornwestheim (DE); Slupianek, Markus, 70176 Stuttgart (DE)
(74) Vertreter: Rau, Manfred

(56) Entgegenhaltungen:
- DE-C- 19 500 060
- US-A- 1 595 470
- US-A- 4 202 659
- US-A- 4 332 541
- US-A- 5 510 030
- US-A- 5 618 423

## Beschreibung

Die Erfindung betrifft eine Sieb-Vorrichtung nach dem Oberbegriff des Anspruches 1.

Bei einer derartigen aus der DE 34 19 822 A1 (entsprechend US-Patent 4,597,870) bekannten Sieb-Vorrichtung ist der Sieb-Stempel zweiteilig ausgeführt. Innerhalb des Sieb-Abschnitts ist ein ringförmiger AbführKanal vorgesehen, der in einen parallel zum Eintritts-Kanal verlaufenden Austritts-Kanal einmündet. Zum Reinigen des Sieb-Abschnitts kann der Sieb-Stempel in Richtung der Achse des Sieb-Stempels verschoben werden. Diese Ausgestaltung ist konstruktiv und fertigungstechnisch aufwändig und schwierig zu reinigen

Eine andere Sieb-Vorrichtung ist aus der US-A-1 595 470 bekannt.

Der Erfindung liegt daher die Aufgabe zugrunde, eine Sieb-Vorrichtung der gattungsgemäßen Art so weiterzubilden, dass sie einfacher aufgebaut und zu reinigen ist und damit auch betriebssicherer ist.

Diese Aufgabe wird durch die Merkmale im Kennzeichnungsteil des Anspruches 1 gelöst. Der Kern der Erfindung liegt darin, dass ein in Richtung der Achse des Sieb-Stempels verlaufender Austritts-Kanal vorgesehen ist, der den gesamten Sieb-Abschnitt und den sich daran anschließenden, dem Verschluss-Abschnitt entgegengesetzten Rohr-Abschnitt des Sieb-Stempels durchsetzt. Dieser Rohr-Abschnitt kann innen von seinem Ende her leicht gereinigt werden. Auch seine Fertigung ist sehr einfach durchführbar. Der Abfluss des gesiebten Materials erfolgt um 90° versetzt, also quer zum Eintritts-Kanal. Die erfindungsgemäße Sieb-Vorrichtung bildet also auch einen Winkel-Adapter zwischen einer vorgeordneten und einer nachgeordneten Vorrichtung, beispielsweise also einem vorgeordneten Extruder oder aber auch einer vorgeordneten Zahnradpumpe und einer Granuliervorrichtung, Zahnradpumpe oder dergleichen als nachgeordnete Vorrichtung,

Insbesondere durch die Ausgestaltung nach Anspruch 2 wird erreicht, dass der Sieb-Stempel auch in der Betriebsstellung in dem Gehäuse der Sieb-Vorrichtung nicht befestigt werden muss, da er mit der nachgeordneten Vorrichtung zur Durchführung eines dem Siebvorgang nachgeordneten Verfahrensschrittes fest verbunden ist. Diese Ausgestaltung weist weiterhin den Vorteil auf, dass Temperatur bedingte Ausdehnungen des Sieb-Stempels und auch der nachgeordneten Vorrichtung kompensiert werden, da der Sieb-Stempel grundsätzlich frei verschiebbar in der Durchgangs-Bohrung des Gehäuses der Sieb-Vorrichtung angeordnet ist. Bei dieser Ausgestaltung ist die erfindungsgemäße Sieb-Vorrichtung gleichzeitig auch ein Kompensator zwischen einer vorgeordneten und einer nachgeordneten Vorrichtung. Die Ausgestaltung nach Anspruch 3 ermöglicht ein schnelles Herstellen oder Lösen der Verbindung des Sieb-Stempels zur nachgeordneten Vorrichtung.

Um den Sieb-Stempel so weit verschieben zu können, dass der Sieb-Abschnitt außerhalb des Gehäuses der Sieb-Vorrichtung liegt, können nach Anspruch 4 geeignete Stempel-Verschiebe-Vorrichtungen vorgesehen sein, und zwar gemäß Anspruch 5 mit Spiel gegenüber dem Gehäuse.

Der Anspruch 6 gibt eine weitere vorteilhafte Ausgestaltungsmöglichkeit wieder.

Weitere Merkmale, Vorteile und Einzelheiten der Erfindung ergeben sich aus der nachfolgenden Beschreibung von Ausführungsbeispielen anhand der Erfindung. Es zeigt
- Fig. 1: eine Extruderanlage mit einem Extruder, einer hieran angebrachten Sieb-Vorrichtung und einer dieser nachgeordneten Vorrichtung zur Durchführung eines weiteren nachgeordneten Verfahrensschrittes im Horizontalschnitt,
- Fig. 2: ein Sieb-Band der Sieb-Vorrichtung,
- Fig. 3: eine weitere Ausgestaltung der Sieb-Vorrichtung in Betriebsstellung,
- Fig. 4: die Sieb-Vorrichtung nach Fig. 3 in Reinigungs-Stellung,
- Fig. 5: eine weitere Ausführungsform der Sieb-Vorrichtung in Betriebs-Stellung und
- Fig. 6: die Sieb-Vorrichtung nach Fig. 5 in Reinigungs-Stellung.

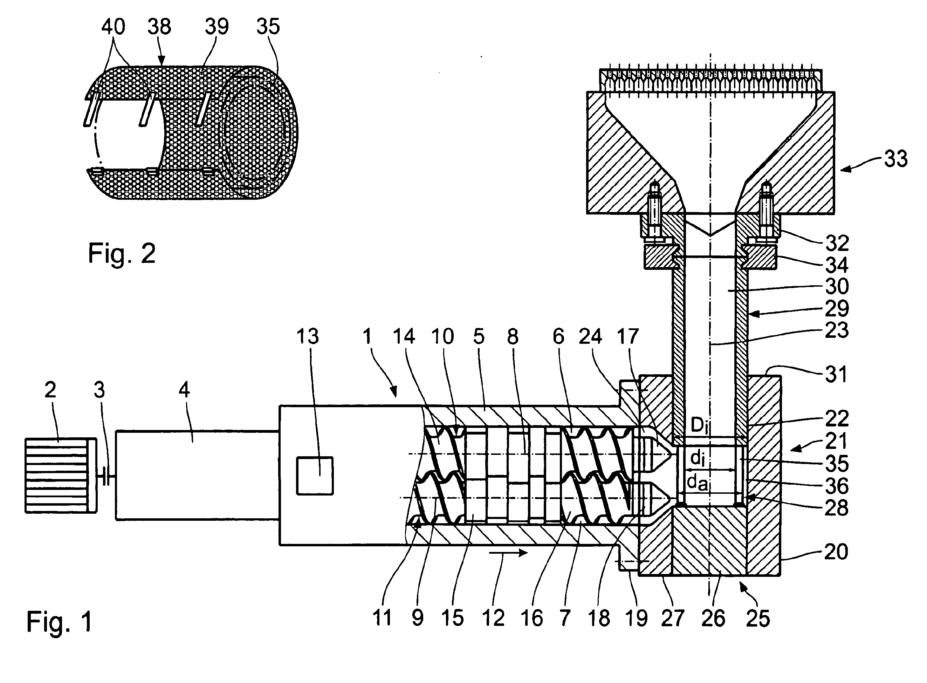

Eine Extruderanlage, zur Aufbereitung insbesondere von Kunststoffen weist gemäß Fig. 1 einen Extruder 1 auf. Er wird mittels eines Motors 2 über eine Kupplung 3 und eine Getriebe 4 angetrieben. Der Extruder 1 weist ein Extruder-Gehäuse 5 auf, in dem zwei Gehäuse-Bohrungen 6, 7 mit zueinander parallelen Achsen 8, 9 ausgebildet sind, die parallel zueinander verlaufen und etwa 8-förmig ineinander greifen. In diesen Gehäuse-Bohrungen 6, 7 sind zwei Schnecken-Wellen 10. 11 angeordnet, die an das Getriebe 4 angekuppelt sind. Die Schneeken-Wellen 10, 11 werden gleich- oder gegensinnig angetrieben. Der Extruder 1 weist einen in einer Förderrichtung 12 hinter dem Getriebe 4 angeordneten Zuführ-Trichter 13 auf, an den sich eine oder mehrere Behandlungszonen anschließen. Hierzu können auf den Schnecken-Wellen 10, 11 - in Förderrichtung 12 hintereinander - Schnecken-Elemente 14, Knet-Elemente 15 und wieder Schnecken-Elemente 16 angebracht sein. Am in Förderrichtung 12 hinteren Ende der Schnecken-Wellen 10, 11 sind Schnecken-Spitzen 17, 18 ausgebildet. Die Schnecken-Spitzen 17, 18 stehen am stromabwärtigen Ende des Gehäuses 5 über dieses nach außen vor.

Am stromabwärtigen End-Flansch 19 des Gehäuses 5 ist ein Gehäuse 20 einer Sieb-Vorrichtung 21 angeschraubt. Das Gehäuse 20 weist eine zylindrische Durchgangs-Bohrung 22 auf, deren Achse 23 quer zur den Achsen 8, 9 und in der durch diese aufgespannten Ebene verläuft. Diese Durchgangs-Bohrung 22 ist mit den Gehäuse-Bohrungen 6, 7 des Extruder-Gehäuses 5 mittels eines Eintritts-Kanals 24 verbunden, der im Gehäuse 20 ausgebildet ist, einen etwa 8-förmigen Querschnitt aufweist und sich unter Anpassung an die Verjüngung der Schnecken-Spitzen 17, 18 zur Durchgangs-Bohrung 22 hin verjüngt.

In der Durchgangs-Bohrung 22 ist ein Sieb-Stempel 25 angeordnet, der in der Durchgangs-Bohrung 22 in Richtung der Achse 23 verschiebbar ist. Er weist einen geschlossenen, gegebenenfalls massiven Verschluss-Abschnitt 26 auf, der in der normalen Betriebsstellung mit einer Seitenwand 27 des Gehäuses 20 abschließt. Er verschließt in dieser Stellung die Durchgangs-Bohrung 22 zur Seitenwand 27 hin. Im Anschluss an den Verschluss-Abschnitt 26 weist der Stempel 25 einen Sieb-Abschnitt 28 auf, der in der Betriebsstellung sich vor dem Eintritts-Kanal 24 befindet. An den Sieb-Abschnitt 28 schließt sich ein Rohr-Abschnitt 29 an, der gleichermaßen wie der Sieb-Abschnitt 28 einen vom Verschluss-Abschnitt 26 bis zum entgegengesetzten Ende hin durchgehenden Austritts-Kanal 30 aufweist. Auch der Rohr-Abschnitt 29 liegt dicht an der Wand der Durchgangs-Bohrung 22 an und dichtet letztere zu der der Seitenwand 27 gegenüberliegenden Seitenwand 31 hin ab. An den Rohr-Abschnitt 29 schließt sich ein Anschluss-Stutzen 32 einer Vorrichtung 33 zur Durchführung eines einem Siebvorgang nachfolgenden Verfahrensschritts an. Im in Fig. 1 dargestellten Ausführungsbeispiel handelt es sich hierbei um eine übliche GranulierVorrichtung. Es kann sich gleichermaßen um eine Zahnradpumpe oder eine andere in der Praxis übliche nachgeordnete Vorrichtung handeln. Der Rohr-Abschnitt und der Anschluss-Stutzen 32 sind mittels einer schnell lösbaren Flansch-Verbindung, beispielsweise eines sogenannten Klammer-Flansches 34, miteinander verbunden.

Der Sieb-Abschnitt 28 weist einen fest mit dem Rohr-Abschnitt 29 und dem Verschluss-Abschnitt 26 verbundenen Stütz-Körper 35 auf, der mit diesen verschweißt oder anders verbunden oder einstückig mit diesen ausgebildet sein kann. Der Stütz-Körper 35 weist in der Regel denselben Innendurchmesser dᵢ wie der Austritts-Kanal 30 auf. Demgegenüber ist sein Außendurchmesser dₐ kleiner als der Innendurchmesser Dᵢ der Durchgangs-Bohrung 22, so dass um den Stütz-Körper 35 ein Ring-Kanal 36 gebildet wird, der durch die Wand der Durchgangs-Bohrung 22 nach außen begrenzt wird. Der Stütz-Körper 35 weist zahlreiche Durchlass-Öffnungen 37 auf, die beispielsweise einen Durchmesser von 5 mm haben.

Um den Stütz-Körper 35 ist ein in Fig. 1 aus Gründen der zeichnerischen Übersichtlichkeit nicht dargestelltes, sondern in Fig. 2 gesondert dargestelltes handelsübliches Sieb-Band 38 gelegt, das eine sehr große Zahl sehr kleiner Filteröffnungen 39 mit z. B. 0.5 mm Durchmesser aufweist. Das Sieb-Band 38 wird mittels Spann-Elementen 40 auf dem Stütz-Körper 35 festgelegt. Diese Spann-Elemente 40 sind leicht lösbar, so dass einerseits die Montage und andererseits die Demontage des Sieb-Bandes 38 auf bzw. von dem Stütz-Körper 35 sehr schnell vonstatten geht.

Vor dem Verschieben des Sieb-Stempels 25 durch Ziehen bzw. Abdrücken wird der Klammer-Flansch 34 geöffnet, d. h. die Verbindung zwischen dem Rohr-Abschnitt 29 und dem Anschluss-Stutzen 32 der Vorrichtung 33 gelöst.

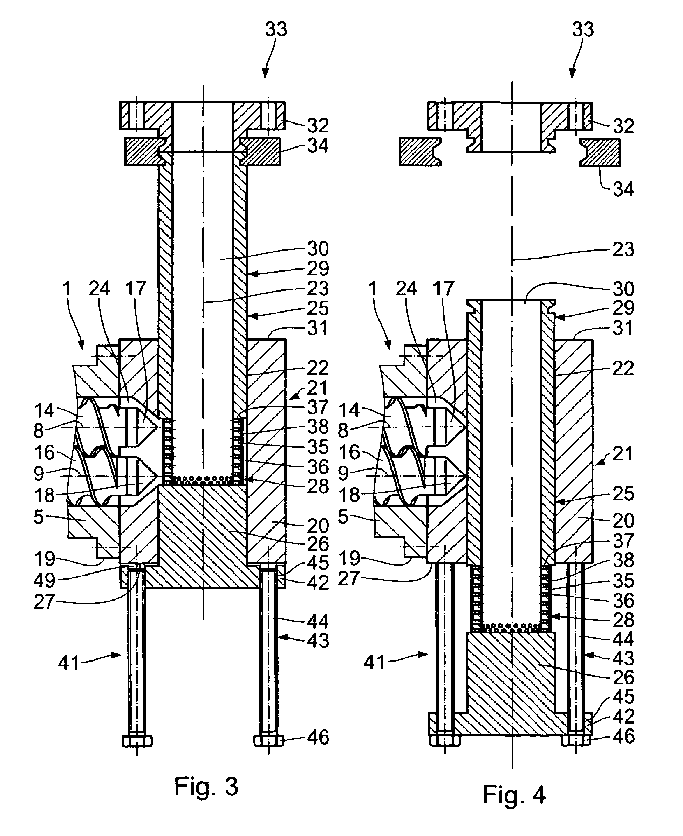

Während bei dem Ausführungsbeispiel nach Fig. 1 keine gesonderten Maßnahmen getroffen sind, den Sieb-Stempel 25 zum Auswechseln des Sieb-Bandes 38 mit dem Verschluss-Abschnitt 26 aus dem Gehäuse 20 herauszuschieben, sind bei den Ausführungsbeispielen nach den Fig. 3 und 4 einerseits und 5 und 6 andererseits hierzu entsprechende Verschiebe-Vorrichtungen 41 bzw. 41' vorgesehen. Hierzu weist der jeweilige Verschluss-Abschnitt 26 bzw. 26' einen Halte-Flansch 42 auf, zwischen dem und dem Gehäuse 20 jeweils mindestens zwei als Linear-Antriebe ausgebildete Verschiebe-Antriebe 43 bzw. 43' vorgesehen sind. Bei dem Ausführungsbeispiel nach den Fig. 3 und 4 handelt es sich hierbei jeweils um Gewinde-Spindeln 44, die sich jeweils in einer Gewinde-Bohrung 45 im Halte-Flansch 42 und andererseits am Gehäuse 20 abstützen. Durch entsprechendes Drehen der Gewinde-Spindeln 44 beziehungsweise über einen an ihrem äußeren Ende angebrachten Mehrkant-Kopf 46 wird der Verschluss-Abschnitt 26 und damit der gesamte Sieb-Stempel 25 aus dem Gehäuse 20 herausgezogen bzw. abgedrückt, und zwar soweit, dass gemäß der Darstellung in Fig. 4 der Sieb-Abschnitt 28 nach außen in einer Reinigungs-Stellung freiliegt. In dieser Position kann das Sieb-Band 38 ausgewechselt und gegebenenfalls der Stütz-Körper 35 gereinigt werden.

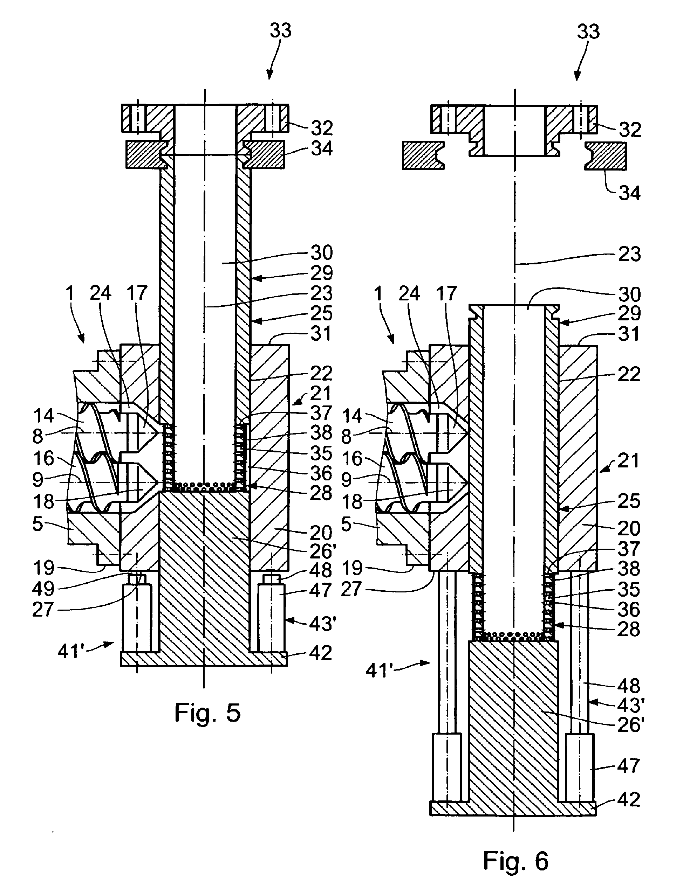

Bei der Ausführung nach den Fig. 5 und 6 sind als Verschiebe-Antriebe 43' hydraulisch oder pneumatisch beaufschlagbare Kolben-Zylinder-Antriebe als Linearantriebe, also als Abdrück-Antriebe, zwischen Halte-Flansch 42 und Gehäuse 20 angeordnet, wobei die Zylinder 47 sich gegen den Halte-Flansch 42 abstützen, während sich die Kolbenstangen 48 gegen das Gehäuse 20 abstützen. Damit auch in der in Fig. 5 dargestellten Betriebsstellung die Verschiebe-Vorrichtung 41' zwischen Halte-Flansch 42 und Gehäuse 20 ausreichend Platz haben, ist bei diesem Ausführungsbeispiel der Verschluss-Abschnitt 26' über die Seitenwand 27 nach außen verlängert.

Das im Extruder 1 in üblicher Weise aufbereitete und plastifizierte Material, in der Regel also Kunststoff, strömt direkt aus dem Extruder-Gehäuse 5 in das Gehäuse 20 der Sieb-Vorrichtung 21, und durch dessen die Schnecken-Spitzen 17, 18 aufnehmenden Eintritts-Kanal 24 in den Ring-Kanal 36. Dort strömt es unter entsprechender Siebung durch das Sieb-Band 38 und den Stütz-Körper 35 in den Austrittskanal 30 und durch diesen in die nachgeordnete Vorrichtung 33. Soweit durch starke Temperaturunterschiede bedingte Ausdehnungen des Rohr-Abschnitts 29 selber aber auch entsprechende in Richtung der Achse 23 verlaufende Ausdehnungen der Vorrichtung 33 auftreten, werden diese in der Sieb-Vorrichtung 21 kompensiert, da der Sieb-Stempel 25 in Richtung seiner Achse 23 frei verschiebbar ist. Damit die geschilderte Kompensation von Temperatur bedingten Längenänderungen stattfinden kann, ist einerseits zwischen den Spindeln 44 und dem Gehäuse 20 bzw. den Kolbenstangen 48 und dem Gehäuse 20 in der Betriebsstellung ein Spiel 49 von einigen Millimetern vorgesehen.

## Patentansprüche

1. Sieb-Vorrichtung (21) für Aufbereitungs-Maschinen, insbesondere Extruder (1),
- mit einem Gehäuse (20), das
-- eine Durchgangs-Bohrung (22) mit einer Achse (23),
-- einen quer zur Achse (23) in die Durchgangs-Bohrung (22) einmündenden Eintritts-Kanal (24) und
-- an den Enden der Durchgangs-Bohrung (22) eine erste und eine zweite Seitenwand (27, 31) aufweist,
- mit einem Sieb-Stempel (25), der
-- einen Sieb-Abschnitt (28),
-- einen den Sieb-Abschnitt (28) in Richtung der Achse (23) zur ersten Seitenwand (27) hin begrenzenden, in der Durchgangs-Bohrung (22) geführten Verschluss-Abschnitt (26, 26'),
-- einen den Sieb-Abschnitt (28) in Richtung der Achse (23) zur zweiten Seitenwand (31) hin begrenzenden, in der Durchgangs-Bohrung (22) geführten Abschnitt und
-- einen von dem Sieb-Abschnitt (28) wegführenden, in dem Abschnitt ausgebildeten Austritts-Kanal (30) aufweist, wobei
der Abschnitt als in Richtung der Achse (23) verlaufender Rohr-Abschnitt (29) ausgebildet ist, in dem der Austritts-Kanal (30) bis zu einem der zweiten Seitenwand (31) zugeordneten Ende des Sieb-Stempels (25) geführt ist,
**dadurch gekennzeichnet,**
**dass** der Rohr-Abschnitt (29) zusammen mit dem Sieb-Abschnitt (28) in der Durchgangs-Bohrung (22) in Richtung der Achse (23) zwischen einer ersten Position und einer zweiten Position verschiebbar ist, wobei in der ersten Position der Sieb-Abschnitt (28) sich vor dem Eintritts-Kanal (24) und in der zweiten Position außerhalb des Gehäuses (20) befindet und wobei in der zweiten Position der Rohr-Abschnitt (29) den Eintritts-Kanal (24) verschließt.

2. Sieb-Vorrichtung (21) nach Anspruch 1, **dadurch gekennzeichnet, dass** das der zweiten Seitenwand (31) zugeordnete Ende des Sieb-Stempels (25) zur Verbindung mit einer nachgeordneten Vorrichtung (33) zur Durchführung eines nachgeordneten Verfahrensschritts ausgebildet ist.

3. Sieb-Vorrichtung (21) nach Anspruch 2, **dadurch gekennzeichnet, dass** der Rohr-Abschnitt (29) mittels einer Schnell-Löse-Verbindung mit der nachgeordneten Vorrichtung (33) verbindbar ist.

4. Sieb-Vorrichtung (21) nach Anspruch 1, **dadurch gekennzeichnet, dass** zwischen dem Gehäuse (20) und dem Verschluss-Abschnitt (26, 26') mindestens eine Verschiebe-Vorrichtung (41, 41') vorgesehen ist.

5. Sieb-Vorrichtung (21) nach Anspruch 4, **dadurch gekennzeichnet, dass** zwischen der mindestens einen Verschiebe-Vorrichtung (41, 41') und dem Gehäuse (20) ein Spiel (49) vorgesehen ist.

6. Sieb-Vorrichtung (21) nach Anspruch 1, **dadurch gekennzeichnet, dass** der Eintritts-Kanal (24) zur Aufnahme von Schnecken-Spitzen (17, 18) eines vorgeordneten Extruders (1) ausgebildet ist.

## Claims

1. A filter (21) for processing machines, in particular extruders (1), comprising
- a casing (20), which has
-- a through hole (22) with an axis (23),
-- an inlet passage (24) which mouthes into the through hole (22) transversely to the axis (23), and
-- a first and a second side wall (27, 31) at the ends of the through hole (22);
- a filter plug (25), which has
-- a filter section (28),
-- a sealing section (26, 26') which is guided in the through hole (22) and defines the filter section (28) in the direction of the axis (23) towards the first side wall (27),
-- a section which is guided in the through hole (22) and defines the filter section (28) in the direction towards the second side wall (31), and
-- an outlet passage (30) which is formed in the section and leads away from the filter section (28), with the section being a tube section (29) which extends in the direction of the axis (23) and in which the outlet passage (30) passes as far as to an end, allocated to the second side wall (31), of the filter plug (25);
**characterized**
**in that** the tube section (29), together with the filter section (28), is movable in the direction of the axis (23) between a first position and a second position inside the through hole (22), with the filter section (28), in the first position, being located in front of the inlet passage (24) and, in the second position, outside the casing (20), and with the tube section (29), in the second position, sealing the inlet passage (24).

2. A filter (21) according to claim 1, **characterized**
**in that** the end, allocated to the second side wall (31), of the filter plug (25) is configured for connection to a downstream arrangement (33) for implementation of a downstream method step.

3. A filter (21) according to claim 2, **characterized**
**in that** the tube section (29) is connectable to the downstream arrangement (33) by means of a quick release coupling.

4. A filter (21) according to claim 1, **characterized**
**in that** at least one shifting device (41, 41') is provided between the casing (20) and the sealing section (26, 26').

5. A filter (21) according to claim 4, **characterized**
**in that** a clearance (49) is provided between the at least one shifting device (41, 41') and the casing (20).

6. A filter (21) according to claim 1, **characterized**
**in that** the inlet passage (24) is configured for accommodation of screw tips (17, 18) of an upstream extruder (1).

## Revendications

1. Dispositif de filtrage (21) pour machines de traitement, notamment pour extrudeuse (1),
- comportant un boîtier (20) qui présente :
-- une forure de passage (22) ayant un axe (23),
-- un conduit d'entrée (24) débouchant, transversalement à l'axe (23), dans la forure de passage (22), et
-- une première et une deuxième paroi latérale (27, 31) qui sont situées aux extrémités de la forure de passage (22),
- comportant une filière de filtrage (25) qui présente :
-- une section de filtrage (28),
-- une section d'obturation (26, 26') insérée dans la forure de passage (22) et limitant la section de filtrage (28) dans la direction de l'axe (23) jusqu'à la première paroi latérale (27),
-- une section insérée dans la forure de passage (22) et limitant la section de filtrage (28) dans la direction de l'axe (23) jusqu'à la deuxième paroi latérale (31), et
-- un conduit de sortie (30) qui est réalisé dans la section et qui s'écarte de la section de filtrage (28),
la section étant réalisée sous forme de section tubulaire (29) qui s'étend dans la direction de l'axe (23) et dans laquelle on fait passer le conduit de sortie (30) jusqu'à une extrémité de la filière de filtrage (25) associée à la deuxième paroi latérale (31),
**caractérisé en ce que**
la section tubulaire (29) peut coulisser, conjointement avec la section de filtrage (28), dans la forure de passage (22) et dans la direction de l'axe (23), entre une première position et une deuxième position, auquel cas, dans la première position, la section de filtrage (28) se trouve devant le conduit d'entrée (24) et, dans la deuxième position, elle se trouve à l'extérieur du boîtier (20), et auquel cas, dans la deuxième position, la section tubulaire (29) obture le conduit d'entrée (24).

2. Dispositif de filtrage (21) selon la revendication 1, **caractérisé en ce que** l'extrémité de la filière de filtrage (25) associée à la deuxième paroi latérale (31) est conçue pour être reliée à un dispositif disposé en aval (33) qui sert à réaliser une étape de processus subséquente.

3. Dispositif de filtrage (21) selon la revendication 2, **caractérisé en ce que** la section tubulaire (29) peut être reliée au dispositif disposé en aval (33) au moyen d'un dispositif de raccordement à détachement instantané.

4. Dispositif de filtrage (21) selon la revendication 1, **caractérisé en ce qu'**il est prévu, entre le boîtier (20) et la section d'obturation (26, 26'), au moins un dispositif de déplacement (41, 41').

5. Dispositif de filtrage (21) selon la revendication 4, **caractérisé en ce qu'**il est prévu un jeu (49) entre le ou les dispositifs de déplacement (41, 41') et le boîtier (20).

6. Dispositif de filtrage (21) selon la revendication 1, **caractérisé en ce que** le conduit d'entrée (24) est conçu pour servir de logement aux pointes de vis sans fin (17, 18) d'une extrudeuse disposée en amont (1).
